# EUROPÄISCHE PATENTANMELDUNG

(11) **EP 1 559 601 A2**
(43) Veröffentlichungstag der Anmeldung: **03.08.2005**
(21) Anmeldenummer: 04030767.0
(22) Anmeldetag: 23.12.2004
(51) Int. Cl.: B60J 10/04

(54) **Kraftfahrzeug, eine Dichtung zum Einbau in das Kraftfahrzeug, ein Herstellungsverfahren und ein Montageverfahren der Dichtung an dem Kraftfahrzeug**

(30) Priorität: 27.01.2004 DE 102004004053
(71) Anmelder: Bayerische Motoren Werke Aktiengesellschaft, 80809 München (DE)
(72) Erfinder: Macha,Ulrich, 85435 Erding (DE); Poetzschke, Daniel, 85748 Garching (DE)

(57) **Zusammenfassung**

2.1 Es sind bereits Kraftfahrzeuge bekannt, bei denen zwischen einer versenkbaren Seitenscheibe und einer feststehenden Seitenscheibe Dichtungen vorgesehen sind. Aufgabe der Erfindung ist es, zur Verringerung der Herstellungs- und Montagekosten jeweils ein Kraftfahrzeug, eine Dichtung, ein Herstellungsverfahren und ein Montageverfahren anzugeben.
2.2 Bei einem Kraftfahrzeug wird dies dadurch erreicht, dass an einen Dichtungsbereich (20; 21, 34) zwischen einem oberen Ende der versenkbaren Seitenscheibe (10) und einem oberen Ende der feststehenden Seitenscheibe (13) in Höhe eines Abschnittes des Daches (6) der Karosserie (2) zwischen einem Knoten (15) einer vorderen Karosseriesäule (3) und einem Knoten (17) einer hinteren Karosseriesäule (5) eines Kraftfahrzeuges (1) eine durchgehende, einteilige Dichtung (19, 22) angeordnet ist, bei der die geometrische Anpassung an die Abdichtungsbereiche durch das Entfernen nicht benötigter Dichtungs-Profilabschnitte (27, 31; 33) für die versenkbare Seitenscheibe (10) und für die feststehende Seitenscheibe (13) erfolgt.

## Beschreibung

Die Erfindung betrifft ein Kraftfahrzeug gemäß dem Oberbegriff des Anspruchs 1, sowie eine Dichtung zum Einbau in das Kraftfahrzeug nach dem Oberbegriff des Anspruchs 2, sowie ein Verfahren zur Herstellung einer solchen Dichtung nach dem Oberbegriff des Anspruchs 15 und ferner ein Verfahren zur Montage der Dichtung nach dem Oberbegriff des Anspruchs 17.

Es ist bereits ein Kraftfahrzeug bekannt, bei dem in einer Karosserieseitenwand eine feststehende Seitenscheibe in einer Karosserieöffnung angeordnet ist. Benachbart dazu ist in einer Seitentür eine versenkbare Seitenscheibe vorgesehen. Zur Abdichtung sind im Dachbereich der Karosserie jeweils ein oberes Abdichtelement für die versenkbare Seitenscheibe und für die feststehende Seitenscheibe angeordnet.

Ferner ist es bekannt, eine Zierleiste am Dachbereich als ein oberes Abschlussteil für Türen mit Fensterrahmen oder für rahmenlose Türen anzuordnen. Da für versenkbare und feststehende Seitenscheiben unterschiedliche Abdichtungsanforderungen bestehen, die unterschiedliche Profilquerschnitte bedingen, sind entsprechend gestaltete, einzelne Abdichtelemente in der Zierleiste befestigt. Somit erhöht sich bei den bekannten Abdichtelementen die Anzahl der Bauteile und damit die Einzelteilkosten.

Aufgabe der Erfindung ist es, ein Kraftfahrzeug nach Anspruch 1 zu schaffen, bei dem die Abdichtung von hintereinander angeordneten Seitenscheiben vereinfacht ist, wobei die eine Seitenscheibe versenkbar und die andere Seitenscheibe feststehend montiert ist.

Eine weitere Aufgabe der Erfindung ist es, eine Dichtung nach Anspruch 2 zu schaffen, die mehrere Funktionen erfüllt.

Eine weitere Aufgabe der Erfindung ist es, ein Verfahren nach Anspruch 15 zur Herstellung einer solchen Dichtung anzugeben.

Eine weitere Aufgabe der Erfindung ist es, ein Verfahren nach Anspruch 17 zur Montage einer erfindungsgemäßen Dichtung anzugeben, die einfach durchzuführen ist.

Die Aufgabe, ein Kraftfahrzeug zu schaffen, wird durch die Merkmale des Anspruchs 1 gelöst.

Die Aufgabe, eine Dichtung anzugeben, wird durch die Merkmale des Anspruchs 2 gelöst.

Die Aufgabe, ein Verfahren zur Herstellung einer erfindungsgemäßen Dichtung anzugeben, wird durch die Merkmale des Anspruchs 15 gelöst.

Die Aufgabe, ein Verfahren zur Montage einer erfindungsgemäßen Dichtung anzugeben, wird durch die Merkmale des Anspruchs 17 gelöst.

Bei dem erfindungsgemäßen Kraftfahrzeug wird in einem Dichtungsbereich an dem Dachabschnitt der Karosserie zwischen einem Knoten einer vorderen Karosserie-Säule (z. B. A-Säule) und einem Knoten einer hinteren Karosserie-Säule (z. B. C-Säule) eine erfindungsgemäße einteilige, extrudierte Dichtung eingesetzt. Die erfindungsgemäße einteilige, extrudierte Dichtung ist mit Abdicht-Profilen an seinen äußeren Längsseiten für ein versenkbares Seitenfenster und für ein feststehendes Seitenfenster des Kraftfahrzeuges versehen. Ferner ist die erfindungsgemäße einteilige, extrudierte Dichtung gleichzeitig ein oberer Rahmenabschluss für das versenkbare Seitenfenster und das feststehende Seitenfenster.

Die erfindungsgemäße Dichtung weist im unbearbeiteten Zustand nach der Herstellung, z. B. der Extrusion, Profilabschnitte auf, die zur Anpassung an die vorgesehene Funktion der Abdichtung der feststehenden Scheibe und der versenkbaren Seitenscheibe des Kraftfahrzeuges in nachfolgenden Bearbeitungsschritten teilweise entfernt werden müssen. Bei der erfindungsgemäßen, fertig bearbeiteten, einteiligen Dichtung sind nur noch die für die betreffende Seitenscheibe benötigten Profilabschnitte vorhanden.

Durch diese erfindungsgemäße Bauweise werden die Funktionen zur Abdichtung einer versenkbaren Seitenscheibe und einer sich daran anschließenden feststehenden Seitenscheibe des Kraftfahrzeuges sowie die optische Funktion einer Zierleiste in einer einzelnen, einteiligen Dichtung geschaffen. Bei der erfindungsgemäßen, einteiligen Dichtung ist ferner im montierten Zustand das Auftreten von Fugen vermieden, wenn sich die erfindungsgemäße Dichtung am Dachrand des Kraftfahrzeuges befindet. Somit wird bei der erfindungsgemäßen Dichtung der optische Eindruck verbessert sowie die Abdichtfunktion erhöht.

Bei dem erfindungsgemäßen Verfahren zur Herstellung einer erfindungsgemäßen Dichtung, bei der bereits alle erforderlichen Profilabschnitte oder dergleichen von Anfang an in einem Bauteil enthalten sind, wird durch einfache Fertigungsschritte, wie Ausstanzen oder Ausschneiden, ein einteiliges Dichtungsprofil für unterschiedliche Funktionen hergestellt.

Durch das erfindungsgemäße Verfahren zur Montage einer erfindungsgemäßen Dichtung an einem Dachbereich eines Kraftfahrzeuges wird durch einfache Montageschritte, wie das Umklappen und/oder das Verrasten von formschlüssig ineinander greifenden Profilabschnitten, die Montage vereinfacht und die Montagezeit verringert.

Eine Ausführungsform der Erfindung wird nachstehend anhand der Zeichnungen beispielshalber beschrieben. Dabei zeigen:
- Fig. 1: eine Seitenansicht eines schematisch dargestellten Kraftfahrzeuges mit einer versenkbaren Seitenscheibe und einer feststehenden Seitenscheibe,
- Fig. 2: eine perspektivische Ansicht eines Querschnitts einer Dichtung nach dem Extrusionsvorgang,
- Fig. 3: eine perspektivische Ansicht eines Querschnitts der in der Fig. 2 gezeigten Dichtung, bei der eine äußere Dichtlippe an einem Längsrand der Dichtung entfernt worden ist,
- Fig. 4: eine perspektivische Ansicht einer Dichtung, bei der nicht benötigte Profilabschnitte zur Abdichtung der feststehenden Scheibe und der versenkbaren Seitenscheibe entfernt sind,
- Fig. 5: eine perspektivische Ansicht eines Querschnittes eines teilweise dargestellten Dachrandes einer Kraftfahrzeug-Karosserie im Bereich einer versenkbaren Seitenscheibe, wobei die Fig. 5 die Montage der Dichtung an dem Dachrand vor einer Befestigung zeigt,
- Fig. 6: die in der Fig. 5 gezeigte perspektivische Querschnittsansicht nach der Befestigung der Dichtung an dem Dachrand,
- Fig. 7: eine perspektivische Querschnittsansicht eines Dachrandes einer Kraftfahrzeugkarosserie, wobei der Schnitt in Höhe der feststehenden Seitenscheibe verläuft und
- Fig. 8: eine Seitenansicht einer teilweise dargestellten weiteren Dichtung, die an einem Dachbereich und einer Karosseriesäule des Kraftfahrzeuges befestigbar ist.

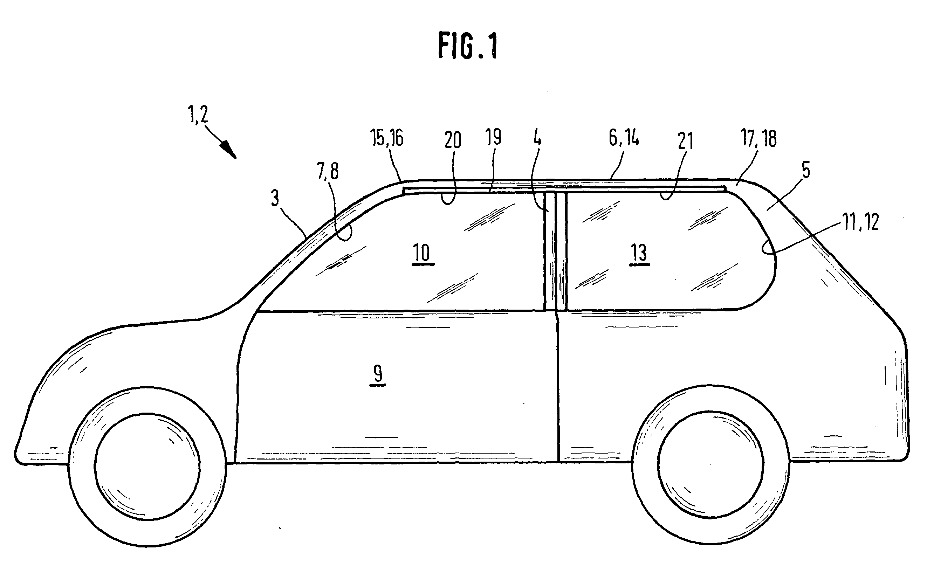

Die Fig. 1 zeigt eine schematische Darstellung eines Kraftfahrzeuges 1, bei dem eine Seite einer Karosserie 2 dargestellt ist. Die Karosserie 2 weist eine A-Säule oder vordere Säule 3, eine davon beabstandete B-Säule oder mittlere Säule 4 und eine davon beabstandete C-Säule oder hintere Säule 5 auf, wobei diese Karosserie-Säulen 3, 4, 5 durch ein Dach 6 miteinander verbunden sind.

In einer Karosserieöffnung 7 zwischen der A-Säule 3 und der B-Säule 4 ist eine Seitentür 8 verschwenkbar angeordnet. Die Seitentür 8 weist einen Türkörper 9 sowie eine versenkbare Seitenscheibe 10 auf. Zwischen der B-Säule 4 und der C-Säule 5 ist in einer Karosserieöffnung 11 einer Seitenwand 12 eine feststehende Seitenscheibe 13 angeordnet.

Ferner ist in der Fig. 1 an einem Seitenrand 14 des Daches 6 zwischen einem vorderen Knoten 15 an einem oberen Ende 16 der A-Säule 3 und einem hinteren Knoten 17 an einem oberen Ende 18 der C-Säule 5 ein in etwa waagrecht verlaufendes oberes Abdichtelement oder eine obere Dichtung 19 schematisch dargestellt.

Die Dichtung 19 dient zur Abdichtung eines oberen Seitenrandes 20 der versenkbaren Seitenscheibe 10 und eines oberen Seitenrandes 21 der feststehenden Seitenscheibe 13. An die obere Dichtung 19 schließen sich nicht dargestellte Dichtungsabschnitte an, die in Richtung der A-Säule 3, der B-Säule 4 und der C-Säule 5 verlaufen.

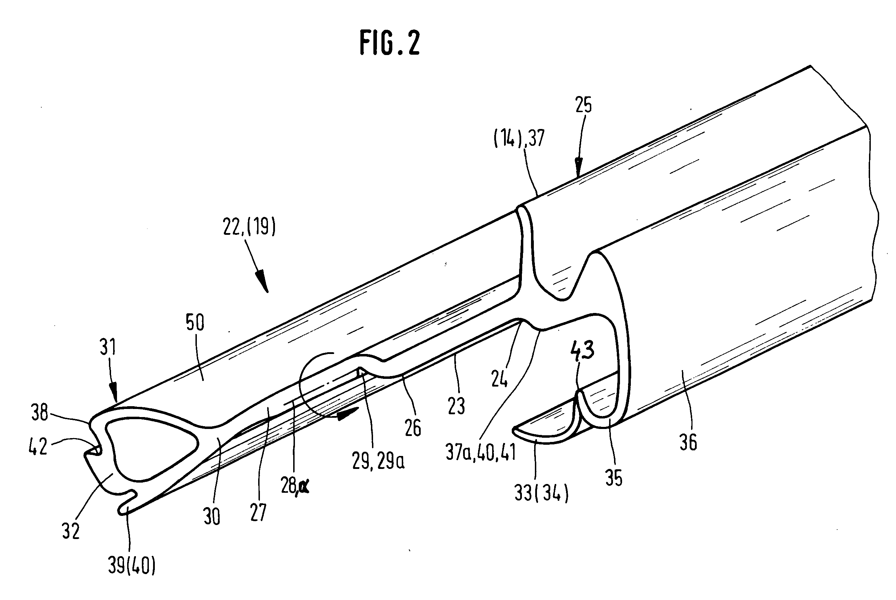

Die Fig. 2 zeigt einen Querschnitt einer unbearbeiteten Dichtung 22, die beispielsweise in einem Extrusionsverfahren hergestellt wurde. Die Dichtung 22 weist einen im Querschnitt in etwa rechteckförmigen Befestigungsabschnitt 23 auf, an den sich auf einer Seite an einem seitlichen Längsrand 24 ein äußerer Profilabschnitt 25 anschließt.

An einem zu dem Längsrand 24 gegenüberliegenden seitlichen Längsrand 26 des Befestigungsabschnittes 23 folgt ein klappbarer Längsabschnitt 29, an den sich ein im Querschnitt in etwa rechteckförmiger Längsabschnitt 27 anschließt. Der klappbare Längsabschnitt 29 ist über eine Längsachse 28 um einen Winkel α schwenkbar ist, wobei der Winkel α bei α = 180° ± 30° liegt. Der Längsabschnitt 29 ist in der gezeigten Ausführungsform mit einer Längsrille 29 a versehen. An einem seitlichen Längsrand 30 des Längsabschnittes 27 schließt sich ein äußerer Profilabschnitt 31 mit einem im Querschnitt geschlossenen Profil 32 an.

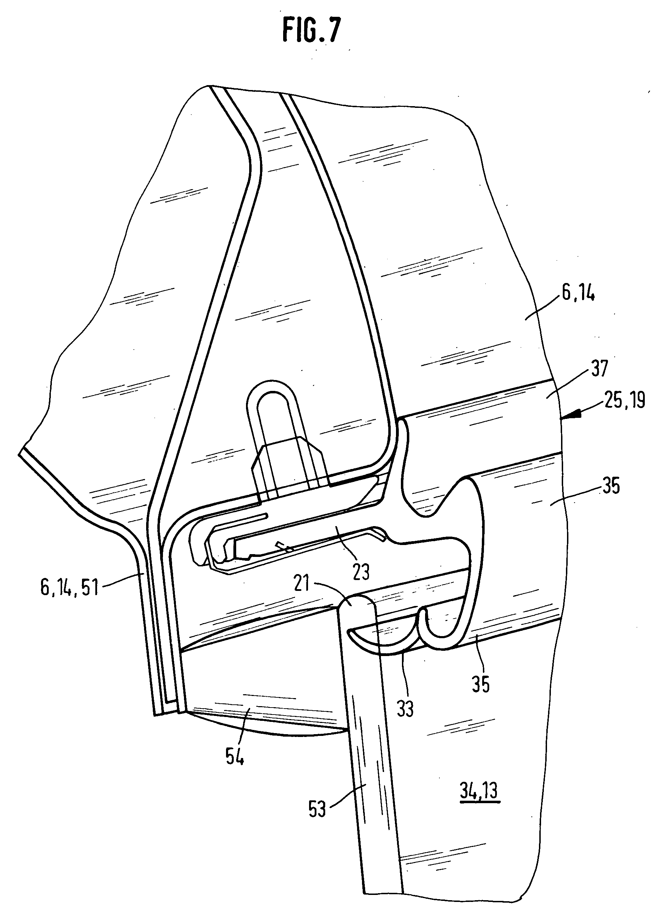

An dem Profilabschnitt 25 ist eine äußere Dichtlippe 33 vorgesehen, die in Anlage an eine in der Fig. 7 gezeigte Außenfläche 34 der feststehenden Seitenscheibe 13 kommt. Im Anschluss an die äußere Dichtlippe 33, die in Längsrichtung der Dichtung 22 verläuft, schließt sich ein C-förmiger, offener Profilabschnitt 35 an. Die Außenfläche 36 des offenen Profilabschnittes 35 hat die Funktion einer Zierleiste. Zwischen dem Längsrand 24 und dem C-förmigen Profilabschnitt 35 ist eine weitere Dichtlippe 37 ausgebildet, die in Anlage an den Seitenrand 14 des Daches 6 kommt.

An einer stirnseitigen Außenfläche 38 des Profils 32 ist eine Dichtlippe 39 ausgebildet. Die Dichtlippe 39 befindet sich auf der gleichen Seite der Dichtung 22 wie die äußere Dichtlippe 33 des Profilabschnittes 25. Die Dichtlippe 39 kommt bei der Montage in Anlage an einen Bodenabschnitt 37a der Dichtlippe 37 bzw. an eine Außenfläche 40 der Dichtung 22, die in einem Zwischenbereich 41 zwischen dem C-förmigen Profilabschnitt 35 und dem Längsrand 24 ausgebildet ist. Beabstandet zu der Dichtlippe 39 ist an der stirnseitigen Außenfläche 38 des Profilabschnittes 31 eine U- oder V-förmige Ausnehmung 42 ausgebildet.

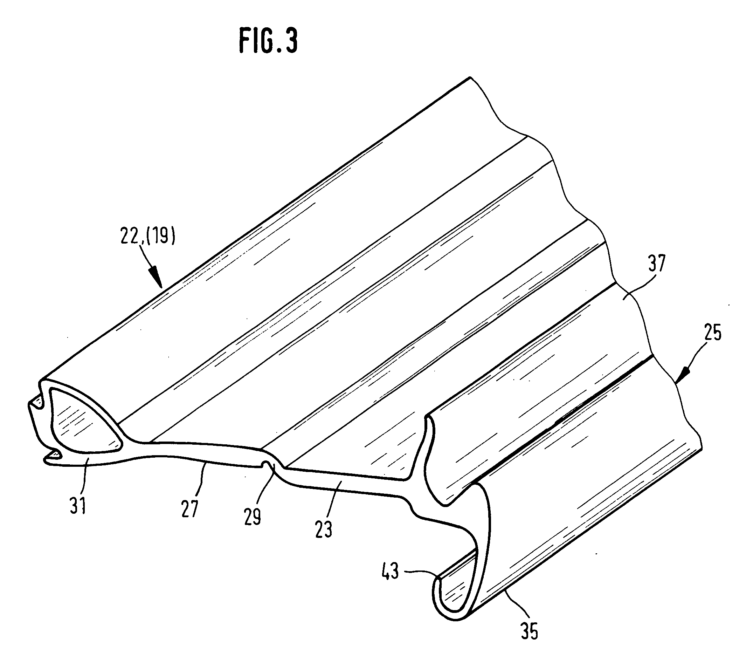

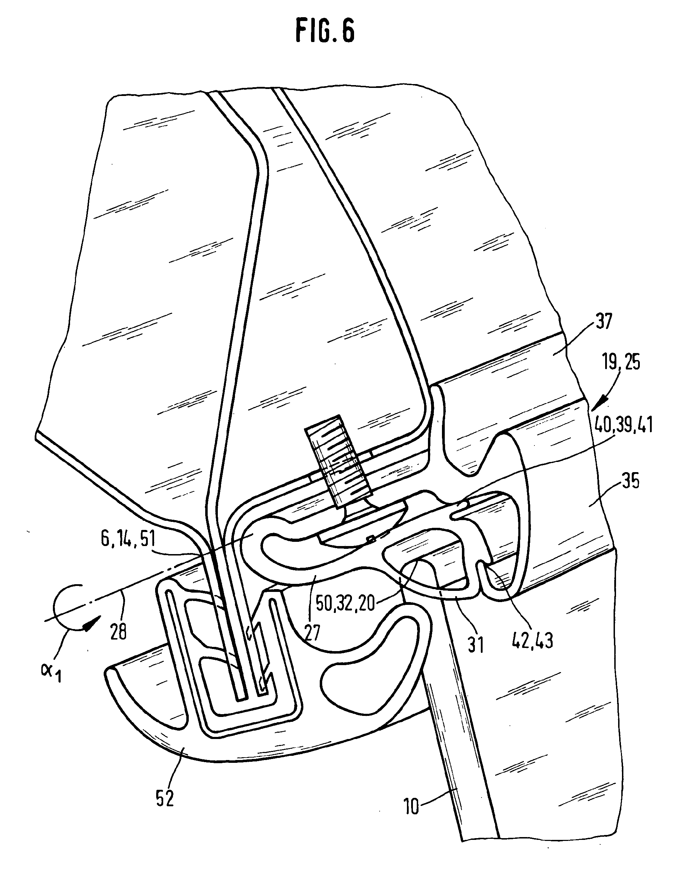

Die Fig. 3 zeigt die Dichtung 22 in einem Zustand, nachdem die äußere Dichtlippe 33 weggeschnitten wurde und der Außenrand 43 des C-förmigen Profilabschnitts 35 frei zugänglich ist. Der Außenrand 43 des bearbeiteten C-förmigen Profilabschnitts 35 rastet bei der Montage der fertigen Dichtung 19 in die U- oder V-förmige Ausnehmung 42 ein. Die formschlüssige Verbindung zwischen der V-förmigen Ausnehmung 42 und dem Außenrand 43 ist in der Fig. 6 oberhalb der versenkbaren Seitenscheibe 10 dargestellt.

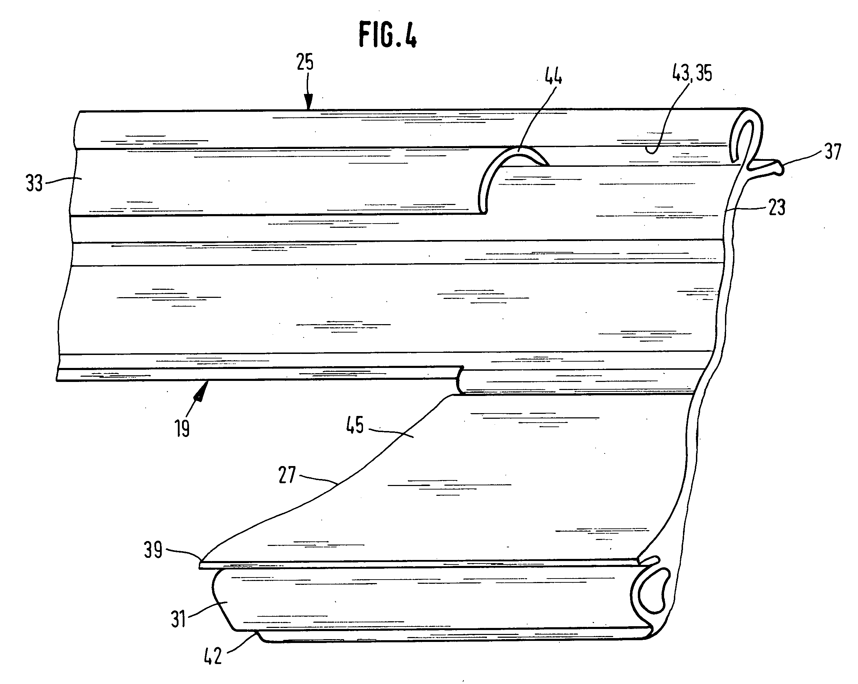

Die Fig. 4 zeigt die fertige Dichtung 19. Zur Herstellung der montierbaren Dichtung 19 wurde bei der Dichtung 22 in Höhe der feststehenden Seitenscheibe 13 der für die feststehende Seitenscheibe 13 nicht benötigte Längsabschnitt 27 mit dem Profilabschnitt 31 weggeschnitten und in Höhe der versenkbaren Seitenscheibe 10 die für die versenkbare Seitenscheibe 10 nicht benötigte äußere Dichtlippe 33 entfernt.

Die Dichtung 19 weist gegenüber der Dichtung 22 eine neue Stirnseite 45 am Längsabschnitt 27 und am Profilabschnitt 31, einen neuen, in Längsrichtung verlaufenden Außenrand 43 des C-förmigen Profilabschnitts 35 und eine neue Stirnseite 44 an der noch vorhandenen äußeren Dichtlippe 33 auf. An die Stirnseite 44 schließt sich der Außenrand 43 des C-förmigen Profilabschnitts 35 an.

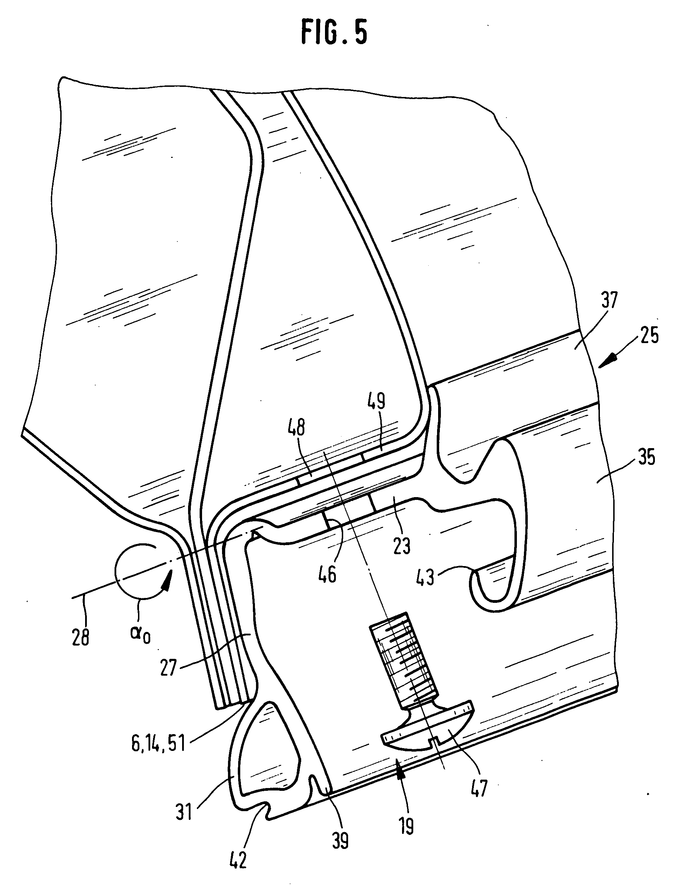

Die Fig. 5 zeigt die Befestigung der Dichtung 19 an dem Seitenrand 14 des Daches 6. Zu diesem Zweck ist der Längsabschnitt 27 mit dem äußeren Profilabschnitt 31 um einen Winkel α₀ in eine Zwischenposition geklappt. Der Winkel α₀ beträgt in der gezeigten Ausführungsform ungefähr α₀ = 90°. Die Klappung erfolgt durch ein Schwenken des klappbaren Längsabschnittes 29 um die Längsachse 28.

An dem Befestigungsabschnitt 23 sind Durchgangsöffnungen 46 ausgebildet, durch die ein Befestigungsmittel 47 hindurchführbar ist. Im Seitenrand 14 des Daches 6 sind ebenfalls Durchgangsöffnungen 48 vorgesehen, so dass eine Befestigung des Befestigungsmittels 47 an einer Innenfläche 49 des Seitenrandes 14 möglich ist. In der gezeigten Ausführungsform ist das Befestigungsmittel 47 eine Niete.

In dem in der Fig.6 gezeigten, nachfolgenden Montageschritt, bei dem die Dichtung 19 an dem Seitenrand 14 des Daches 6 angeordnet wird, wird der Längsabschnitt 27 mit dem Profilabschnitt 31 um einen weiteren Winkel α₁ in eine Endposition in Richtung auf den Befestigungsabschnitt 23 geklappt. Der Winkel α₁ liegt in der gezeigten Ausführungsform bei α₁ = 90°. Bei diesem Klappvorgang rastet der Außenrand 43 des C-förmigen Profilabschnitts 35 in die V-förmige Ausnehmung 42 des Profilabschnittes 31 ein.

Ferner liegt die Dichtlippe 39 des Profilabschnittes 31 an der Außenfläche 40 der Dichtung 19 in dem Zwischenbereich 41 zwischen dem C-förmigen Profilabschnitt 35 und der Dichtlippe 37 an. Unterhalb des geschlossenen Profils 32 kommt der obere Seitenrand 20 der versenkbaren Seitenscheibe 10 an einer Außenfläche 50 des Profils 32 in Anlage. An einem Flansch 51 des Seitenrandes 14 des Daches 6 ist eine weitere Dichtung 52 angeordnet.

Die Fig. 7 zeigt die Befestigung der Dichtung 19 oberhalb des oberen Seitenrandes 21 der feststehenden Seitenscheibe 13. Zwischen dem Flansch 51 und einer Innenfläche 53 der feststehenden Seitenscheibe 13 ist ein Klebstoff 54, beispielsweise in Raupenform, eingebracht. Die äußere Dichtlippe 33 des C-förmigen Profilabschnittes 35 liegt an einer nach außen gerichteten Außenfläche 34 der feststehenden Seitenscheibe 13 an. Die Dichtlippe 37 ist abdichtend an dem Seitenrand 14 des Daches 6 angeordnet.

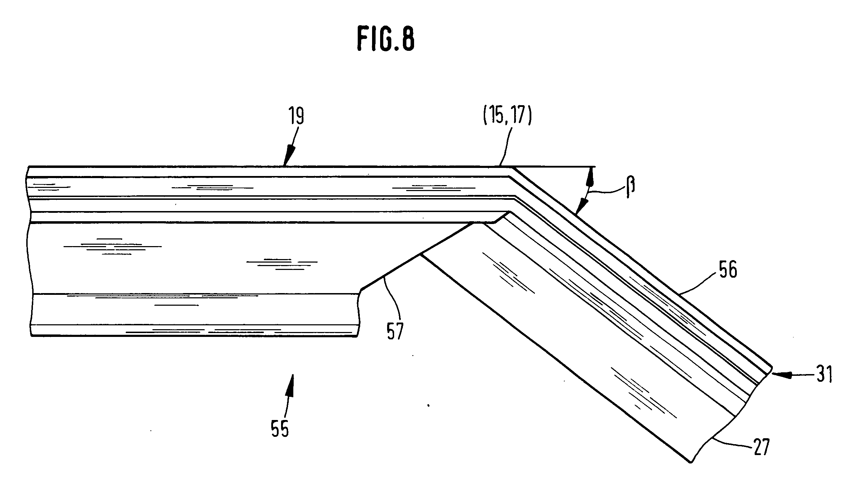

In der Fig. 8 ist eine Ausführungsform einer Dichtung 55 gezeigt, bei der an die obere Dichtung 19 ein weiterer Dichtungsabschnitt 56 einstückig angeordnet ist. Die Anordnung erfolgt in einem Bereich eines Knotens 15, 17 am Übergang zwischen dem Dach 6 und einer Karosseriesäule 3, 5. Der Dichtungsabschnitt 56 wird an dem Ende 57 der Dichtung 19 unter einem Winkel β, der von der Geometrie der betreffenden Karosseriesäule 3, 5 abhängig ist, montiert.

In einer Ausführungsform kann der Dichtungsabschnitt 56 dabei ein in einem vorherigen Fertigungsvorgang abgeschnittener Dichtungsabschnitt der Dichtung 22 sein. Beispielsweise ist der Dichtungsabschnitt 56 der Längsabschnitt 27 mit dem geschlossenen Profilabschnitt 31.

## Patentansprüche

1. Kraftfahrzeug mit einer Karosserie, bei der in einer Karosserie-Öffnung einer Seitenwand zwischen zwei benachbarten Karosserie-Säulen eine Seitentür verschwenkbar angeordnet ist, mit einer in der Seitentür versenkbaren Seitenscheibe, mit einer feststehenden Seitenscheibe, die zu der versenkbaren Seitenscheibe benachbart ist und die zwischen zwei benachbarten Karosserie-Säulen angeordnet ist, mit einem Dichtungsabschnitt für die versenkbare Seitenscheibe und mit einem Dichtungsabschnitt für die feststehende Seitenscheibe, wobei die Dichtungsabschnitte über mindestens einen Befestigungsabschnitt an einem Dachabschnitt der Karosserie angeordnet sind und wobei die Dichtungsabschnitte mindestens einen Dichtungs-Profilabschnitt oder dergleichen zur Abdichtung der jeweiligen Seitenscheibe aufweisen,
**dadurch gekennzeichnet, dass** an einen Dichtungsbereich (20; 21, 34) zwischen einem oberen Ende der versenkbaren Seitenscheibe (10) und einem oberen Ende der feststehenden Seitenscheibe (13) in Höhe eines Abschnittes des Daches (6) der Karosserie (2) zwischen einem Knoten (15) einer vorderen Karosseriesäule (3) und einem Knoten (17) einer hinteren Karosseriesäule (5) eines Kraftfahrzeuges (1) eine durchgehende, einteilige Dichtung (19, 22) angeordnet ist, bei der die geometrische Anpassung an die Abdichtungsbereiche durch das Entfernen nicht benötigter Dichtungs-Profilabschnitte (27, 31; 33) für die versenkbare Seitenscheibe (10) und für die feststehende Seitenscheibe (13) erfolgt ist.

2. Dichtung mit Profilabschnitten zum Einbau in ein Kraftfahrzeug nach Anspruch 1,
**dadurch gekennzeichnet, dass** die einteilige Dichtung (19, 22) an einem äußeren Längsrand einen Profilabschnitt (31) aufweist, der zur Abdichtung der versenkbare Seitenscheibe (10), dass die einteilige Dichtung (19, 22) an einem dazu gegenüberliegenden äußeren Längsrand mit einem Profilabschnitt (33, 35) für die Abdichtung der feststehenden Seitenscheibe (13) und mit einem Profilabschnitt (37) für die Abdichtung des Daches (6) versehen ist, und dass zwischen den Profilabschnitten (31; 33, 35, 37) einstückig Verbindungsabschnitte (23, 27, 29) ausgebildet sind.

3. Dichtung nach Anspruch 2,
**dadurch gekennzeichnet, dass** ein Verbindungsabschnitt (23) der einteiligen Dichtung (19) als ein Befestigungsabschnitt (23) ausgebildet ist, der Durchgangsöffnungen (46) aufweist, und dass eine Außenfläche des Befestigungsabschnittes (23) so ausgebildet ist, dass der Befestigungsabschnitt (23) an einer Befestigungsfläche (49) des betreffenden Abschnittes des Daches (6) der Karosserie (2) montierbar ist.

4. Dichtung nach einem der Ansprüche 2 oder 3,
**dadurch gekennzeichnet, dass** in einem mittleren Bereich der einteiligen Dichtung (19) ein Verbindungsabschnitt (29) vorgesehen ist, der als ein um eine Längsachse (28) klappbarer Längsabschnitt (29) ausgebildet ist, und dass der klappbare Längsabschnitt (29) zwischen dem Längsabschnitt (23) und einem als Längsabschnitt (27) ausgebildeten Verbindungsabschnitt (27 angeordnet ist.

5. Dichtung nach einem der vorhergehenden Ansprüche,
**dadurch gekennzeichnet, dass** der Längsabschnitt (29) um einen Winkel α klappbar ist, der bei α = α₀ + α₁ = 180° ± 30° liegt.

6. Dichtung nach einem der vorhergehenden Ansprüche,
**dadurch gekennzeichnet, dass** an dem klappbaren Längsabschnitt (29) eine Längsrille (29a) ausgebildet ist.

7. Dichtung nach einem der vorhergehenden Ansprüche,
**dadurch gekennzeichnet, dass** an einem Längsseitenrand (30) des Längsabschnittes (27) der Profilabschnitt (31) angeformt ist.

8. Dichtung nach einem der vorhergehenden Ansprüche,
**dadurch gekennzeichnet, dass** der Dichtungs-Profilabschnitt (31) ein geschlossenes Profil (32) aufweist, an dessen eine Außenfläche (50) im montierten Zustand der Dichtung (19) ein oberer Seitenrand (20) der geschlossenen, versenkbaren Seitenscheibe (10) in Anlage bringbar ist.

9. Dichtung nach einem der vorhergehenden Ansprüche,
**dadurch gekennzeichnet, dass** der Dichtungs-Profilabschnitt (31) mit einer äußeren Dichtlippe (39) versehen ist, die bei einem umgeklappten Längsabschnitt (27) in Anlage an eine Außenfläche (40) eines Zwischenbereiches (37a, 41) zwischen den Dichtungs-Profilabschnitten (35 und 37) kommt.

10. Dichtung nach einem der vorhergehenden Ansprüche,
**dadurch gekennzeichnet, dass** der Dichtungs-Profilabschnitt (31) eine Aussparung (42) aufweist, die zur Aufnahme und Verrastung eines Außenrandes (43) des Dichtungs-Profilabschnittes (35) dient.

11. Dichtung nach einem der vorhergehenden Ansprüche,
**dadurch gekennzeichnet, dass** der Längsabschnitt (23) im Anschluss an einen Längsrand (24) Profilabschnitte (33, 35, 37) aufweist, die jeweils zur Abdichtung einer Außenfläche (33, 34) der feststehenden Seitenscheibe (13), als Zierleiste (35) und zur Abdichtung eines Seitenrandes (37, 14) des Daches (6) dienen.

12. Dichtung nach einem der vorhergehenden Ansprüche,
**dadurch gekennzeichnet, dass** sich an einen Längsrand (24) des Befestigungsabschnittes (23) eine Dichtlippe (37) anschließt, die im montierten Zustand der Dichtung (19) an einem Seitenrand (14) des Daches (6) anliegt, und dass die Dichtlippe (37) über einen Bodenabschnitt (37a) mit dem Dichtungs-Profilabschnitt (35) einstückig verbunden ist.

13. Dichtung nach einem der vorhergehenden Ansprüche,
**dadurch gekennzeichnet, dass** die Außenfläche (36) des Dichtungs-Profilabschnitt (35) als Zierleiste dient und dass an einem Ende des Dichtungs-Profilabschnittes (35) ein Außenrand (43) ausgebildet ist, der die Funktion eines Hakens zur Verrastung mit der Ausnehmung (42) des Dichtungs-Profilabschnittes (31) hat.

14. Dichtung nach einem der vorhergehenden Ansprüche,
**dadurch gekennzeichnet, dass** an dem Außenrand (43) des Dichtungs-Profilabschnittes (35) die äußere Dichtlippe (33) einteilig ausgebildet ist, die im montierten Zustand der Dichtung (19) an der Außenfläche (34) der feststehenden Seitenscheibe (13) anliegt.

15. Verfahren zur Herstellung einer Dichtung nach den Ansprüchen 2 bis 14 zum Einbau in ein Kraftfahrzeug nach Anspruch 1,
**dadurch gekennzeichnet, dass** in einem ersten Fertigungsschritt ein einteiliges Profil einer Dichtung (22) extrudiert wird, die alle erforderlichen Dichtungsabschnitte und dergleichen aufweist, und dass in einem weiteren Fertigungsschritt oder in mehreren weiteren Fertigungsschritten jeweils ein für die versenkbare Seitenscheibe (10) nicht benötigter Dichtungs-Profilabschnitt (33) und ein für die feststehende Seitenscheibe (13) nicht benötigter Dichtungs-Profilabschnitt (27, 31) zur Herstellung der montierbaren Dichtung (19) entfernt werden.

16. Verfahren zur Herstellung einer Dichtung nach Anspruch 15,
**dadurch gekennzeichnet, dass** zur Herstellung einer verlängerten Dichtung (55) in einem weiteren Fertigungsschritt oder in mehreren Fertigungsschritten ein von der einteiligen Dichtung (19) abgeschnittener Dichtungs-Profilabschnitt (27, 31) mit einem Ende (57) der einteiligen Dichtung (19) unter einem Winkel β, der von der Geometrie der betreffenden Karosseriesäule (3, 4, 5) abhängig ist, einstückig verbunden wird.

17. Verfahren zur Montage einer nach dem Verfahren der Ansprüche 15 und 16 hergestellten Dichtung nach den Ansprüchen 2 bis 14 zum Einbau in ein Kraftfahrzeug nach Anspruch 1,
**dadurch gekennzeichnet, dass** der Dichtungs-Profilabschnitt (27, 31), der für den oberen Seitenrand (20) der versenkbaren Seitenscheibe (10) erforderlich ist, zunächst um einen Winkel α₀ gebogen wird, dass die Befestigungsfläche des Befestigungsabschnittes (23) der Dichtung (19) an die Befestigungsfläche (49) des Seitenrandes (14) des Daches (6) angelegt wird und über Befestigungsmittel (47) befestigt wird, dass anschließend der Dichtungs-Profilabschnitt (27, 31) weiter um einen Winkel α₁ gebogen wird, bis die Ausnehmung (42) des Dichtungs-Profilabschnitts (31) mit dem als hakenförmigen Befestigungsabschnitt dienenden Außenrand (43) des Dichtungs-Profilabschnittes (35) in Eingriff kommt.

18. Verfahren nach Anspruch 17, **dadurch gekennzeichnet, dass** der Winkel α₀ von der Geometrie am Seitenrand (14, 49, 51) abhängig ist,

19. Verfahren nach einem der Ansprüche 17 und 18, **dadurch gekennzeichnet, dass** der Winkel α₀ = 90° ± 20° beträgt.

20. Verfahren nach einem der vorhergehenden Ansprüche,
**dadurch gekennzeichnet, dass** die Befestigungsmittel (47) Nieten oder Schrauben sind.
